# EUROPEAN PATENT SPECIFICATION

(11) **EP 3 554 221 B1**
(45) Date of publication and mention of the grant of the patent: **16.04.2025**
(21) Application number: 17881896.9
(22) Date of filing: 14.12.2017
(51) Int. Cl.: A01G 25/09, G01F 1/00, G01F 1/66, G01M 3/00

(54) **A SYSTEM FOR DETECTING FLUID FLOW IN A FLUID COMMUNICATING DEVICE AND A WATERING SYSTEM COMPRISING A FLUID FLOW DETECTING SYSTEM**
SYSTEM ZUR ERKENNUNG DES FLÜSSIGKEITSFLUSSES IN EINER FLÜSSIGKEITSÜBERTRAGUNGSVORRICHTUNG UND BEWÄSSERUNGSSYSTEM MIT EINEM FLÜSSIGKEITSFLUSSERKENNUNGSSYSTEM
SYSTÈME DE DÉTECTION D'UN ÉCOULEMENT DE FLUIDE DANS UN DISPOSITIF DE COMMUNICATION FLUIDIQUE, ET SYSTÈME D'ARROSAGE COMPRENANT UN SYSTÈME DE DÉTECTION D'UN ÉCOULEMENT DE FLUIDE

(30) Priority: 14.12.2016 NO 20161986
(43) Date of publication of application: 23.10.2019
(73) Proprietor: 7Sense Agritech AS, 3187 Horten (NO)
(72) Inventor: TANGEN, Max J., 3187 Horten (NO); STENSAA, Frode, 3187 Horten (NO)
(74) Representative: Acapo AS
(86) International application number: PCT/NO2017/050328
(87) International publication number: WO 2018/111117

(56) References cited:
- WO-A1-2011/052866
- WO-A2-01/69182
- WO-A2-2011/058561
- WO-A2-2015/134715
- DE-A1- 10 012 926
- GB-A- 2 519 643
- GB-A- 2 519 643
- US-A- 3 580 092
- US-A- 3 580 092
- US-A- 4 186 881
- US-A- 4 186 881
- US-A- 5 287 884
- US-A- 5 287 884
- US-A1- 2002 073 768
- US-A1- 2002 073 768
- US-A1- 2005 000 277
- US-B1- 6 567 006
- US-B1- 6 567 006
- US-B1- 9 335 297
- US-B1- 9 335 297

## Description

### Background of the Invention

### Field of the Invention

The invention relates to fluid flow measurement in general and more specifically a system for determining the presence of water flow in a pipe.

### Background Art

Agricultural watering systems typically employ long hoses where high pressure forces large flowrates of water. Operating in rough environments there is a significant risk for connections or couplings failing or leaks in the hose that quickly develops into ruptures. This in turn causes huge leaks that lead to rapid soil erosion and potential damage. In many countries water is a limited resource and it is important to eliminate water waste. It is therefore crucial to ensure there is no leak and stop the water flow quickly once a leak develops.

There are countless ways of detecting water flow such as flow rate meters inserted in a pipe or indirectly such as measuring a pressure that arises with a flow. Most of these are complicated, fragile, expensive, or require insertion into a pipe to operate. Many such modifications can also increase the number of components that can fail and thus reduce the overall reliability.

### Disclosure of the state of the art

US 9.335.297B1 describes a system for detecting water flow from a shower head in a bathroom. The water flow is detected by capturing acoustic signals generated by the water exiting the shower head. A disadvantage with the system is use in noisy locations where the acoustic signals are masked by noise.

US 4,186,881 describes an irrigation machine having a hose reel connected to a supply of water under pressure. One disadvantage with the irrigation machine is that leakage and failure is not easily detected.

GB2519643 describes to a flow sensing device using ultrasonic or noise sensors to be attached to a pipe or a cable.

US3580092 describes a clamp on flow meter using ultrasonic radiation above the audio range to at least about 100 kHz.

US5287884 describes a water flow monitoring system using a microphone as well as other traditional means such as a pressure transducer, a rotating paddle wheel, a rotameter, and a switch.

US2005/000277 describes an apparatus and process for monitoring fluid flow through a nozzle using a microphone that uses a frequency range of 800 Hz to 5 kHz where interference from background machine motion may not be an issue in the field of use.

There is therefore a need for a system to overcome the above mentioned problems.

### Summary of the Invention

The inventor has appreciated that the known water flow detectors exhibit one or more of the following problems in operation, for example.
- Difficulty to detect water flow in noisy locations
- Difficulty to remotely detect leakage in the system
- Detection and location of errors in the system
- Unreliable determination of flux of water flow
- Prone to errors in the measurements
- Unreliable measurements
- Difficult to use on mobile installations

The inventor has therefor devise a system for detecting fluid flow addressing one or more of the problems described above.

Thus a main objective of the present invention is to provide a system that is simple and robust for determining the presence of water flow in a pipe.

Another objective of the present invention is to provide a system that is adapted to noisy locations.

Yet another objective of the present invention is to provide a system that is suitable to detect leakages.

### Means for Solving the Problems

The objective is achieved according to the invention by a system as defined in claim 1.

In a first aspect the present invention relates to a system for detecting fluid flow in a pipe or a hose of a watering system, the watering system comprising: the hose and a reel for the hose; and a sprinkler cart, wherein the pipe connects the hose to a sprinkler assembly of the watering system comprising a sprinkler for distributing water flowing through the hose and a ticker for utilizing energy from the water flowing through the hose to rotate the sprinkler, the system for detecting fluid flow comprising a sensor system comprising at least one sensor for registering presence of vibration, wherein the at least one sensor is attached to at least one selected from a group comprising the hose or pipe and a structure in mechanical communication with the hose or pipe, and wherein the sensor system is configured to detect vibration patterns caused by the ticker and determine an interval between ticks from the ticker. The system is using at least one sensor for registering presence of vibration. The at least one sensor may be selected from a group comprising a vibration detector and a microphone. The at least one sensor is attached to at least one selected from a group comprising the hose or pipe and a structure in mechanical communication with the hose or pipe. The presence of vibrations is preferably determined by attaching the sensor to the hose or pipe. The presence of vibrations can also be registered in a structure in mechanical communication with the hose or pipe. Vibrations resulting from water flowing in or through fluid communicating device can be transmitted into structures that are permanent or temporarily in contact with the fluid communicating device. Vibrations transmitted to the structure can be captured by a sensor attached to the structure. Examples of structures are holders, fasteners, carts, concrete surface in contact with the fluid communicating device or similar elements that are able to propagate vibrations. The system is advantageous in being able to robustly measure fluid flow in fluid communicating device, such as a pipe or hose. Examples of a fluid communicating device is a channel, a canal, a tube, a pipeline, a siphon, a tubing, a duct, or similar that is suitable to lead a fluid stream from source at a first location to a second location. The fluid communicating devices may be made of plastic, rubber, concrete, metal or other material that may guide a fluid flow, such as water. The mentioned fluid is preferably water, but may also be seawater, oil, gas, condensate, chemicals and fluids in a combination of gas and liquid form.

The system is for use on a watering system. The watering system comprises a hose reel unit further comprising a reel for the hose, and a sprinkler cart further comprising a cart, a pipe connected to the hose to a sprinkler assembly, the sprinkler assembly comprising a sprinkler for distributing water flowing through the hose and the pipe and a ticker for utilizing energy from the water flowing through the hose to rotate the sprinkler. Such watering system is advantageous in enabling measurement of fluid flow in the watering system.

Preferably, the watering system further comprises a second system for measuring fluid flow. The second system is attached to the hose reel unit. Attaching the sensor to the hose reel unit enabled measurement of water flow at more than one location in the watering system. The watering system may also comprise one or more additional systems for measuring the fluid flow attached the sprinkler cart, upstream pumps, downstream pumps, connections, couplings, pipes or hoses feeding water to the watering system. Such sensors may be attached to feed pipes, pumps or other structures along the path of the fluid flow from a water source to it is ejected at the sprinkler. One advantage is flexibility in detecting fluid flow at one or more locations along a fluid path.

Preferably, the microphone detects noise caused by the ticker. One advantage is that location of fluid flow can be determined. Similarly the vibration sensor is adapted to detect vibrations from the ticker. Another advantage is having several detectable indicators of fluid flow.

The watering system comprises a hose and a hose reel unit. The hose reel unit further comprises a reel for the hose, and a sprinkler cart. The sprinkler cart comprises a cart, a pipe connecting the hose to a sprinkler assembly. The sprinkler assembly comprises a sprinkler for distributing water flowing through the hose and the pipe and a ticker for utilizing energy from the water flowing though the hose to rotate the sprinkler. The watering system further comprises a system for detecting fluid flow in a pipe or a hose comprising at least one sensor system having a vibration sensor, wherein the sensor system is configured detect vibration patterns in the hose or pipe caused by the ticker and determine an interval between ticks from the ticker. The system for detection fluid flow is attached to at least one selected from a group comprising a pipe, a hose, a hose reel unit and a sprinkler cart. One advantage is to provide a robust system for measurement of fluid flow in a pipe or a hose.

A number of non-exhaustive embodiments, variants or alternatives of the invention are defined by the dependent claims.

The present invention attains the above-described objective by a sensor system comprising a vibration detector attached to a pipe for detecting fluid flow. When a fluid flows through the pipe the naturally occurring vortices will cause a characteristic vibration that will indicate a fluid flow.

### Effects of the Invention

The technical differences over prior art is that the invention simply and robustly allows for detection of presence of a fluid flow in a pipe without placing any component inside the pipe.

The present invention provides several further advantageous effects:
it makes it possible to attach or retrofit such a detector to existing equipment,
it allows for a detachable attachment,
it makes it possible to maintain the integrity of existing equipment without perforating the pipe, and
it makes it possible to locate leakage.

### Brief Description of the Drawings

The above and further features of the invention are set forth with particularity in the appended claims and together with advantages thereof will become clearer from consideration of the following detailed description of an [exemplary] embodiment of the invention given with reference to the accompanying drawings.

The invention will be further described below in connection with exemplary embodiments which are schematically shown in the drawings, wherein:
Fig. 1 shows a schematic view of the content of a typical embodiment
Fig. 2 shows a sensor package
Fig. 3 shows a sensor package attached to a pipe
Fig. 4 shows a typical installation on an agricultural watering system
Fig. 5 shows a communication system with sensor, server and terminal

### Description of the Reference Signs

The following reference numbers and signs refer to the drawings:

| | |
|---|---|
| 100 | Sensor system |
| 102 | Vibration detector |
| 104 | Microphone |
| 106 | Controller unit |
| 108 | Communication unit |
| 109 | Positioning unit |
| 120 | Sensor package |
| 122 | Casing |
| 124 | Contact area |
| 126 | Attachment means |
| 200 | Watering system |
| 210 | Hose reel unit |
| 212 | Reel |
| 214 | Hose |
| 220 | Sprinkler cart or trailer |
| 222 | Cart |
| 224 | Pipe |
| 230 | Sprinkler assembly |
| 232 | Sprinkler |
| 234 | Ticker |
| 300 | Communication system |
| 302 | Communication receiver or transceiver |
| 304 | Server |
| 306 | Terminal |

### Detailed Description of the Invention

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The invention will be further described in connection with exemplary embodiments which are schematically shown in the drawings.

The invention relates to detection of fluid flow in a pipe. A vibration sensor is attached to the pipe. Water is sourced at a water source preferably with pump. The water source is for example a lake, stream, river or similar water source. Water flowing through the pipe will create vibrations due for example to turbulence, encountering obstacles, inlets and outlets of the pipe. These vibrations are captured by the vibration sensor. Based on the detected vibrations, fluid flow in the pipe can be determined. Obstacles encountered in pipes can be junctions, connections, valves, bends, curves, splits, changes in pipe diameter, holes, leakages, or similar that blocks or creates turbulence in the water flow. The detected vibrations can be used to determine type of obstacle or problems along the pipe. The location of the obstacle or problem can also be determined. Similarly the sensor may be attached to objects along the water path like to pumps, junctions, connections, inlets, outlets etc. Objects in communication with the pipe can transmit vibrations and therefor the sensor can also capture vibrations in the fluid flow by being attached to these objects in mechanical communication with the pipe.

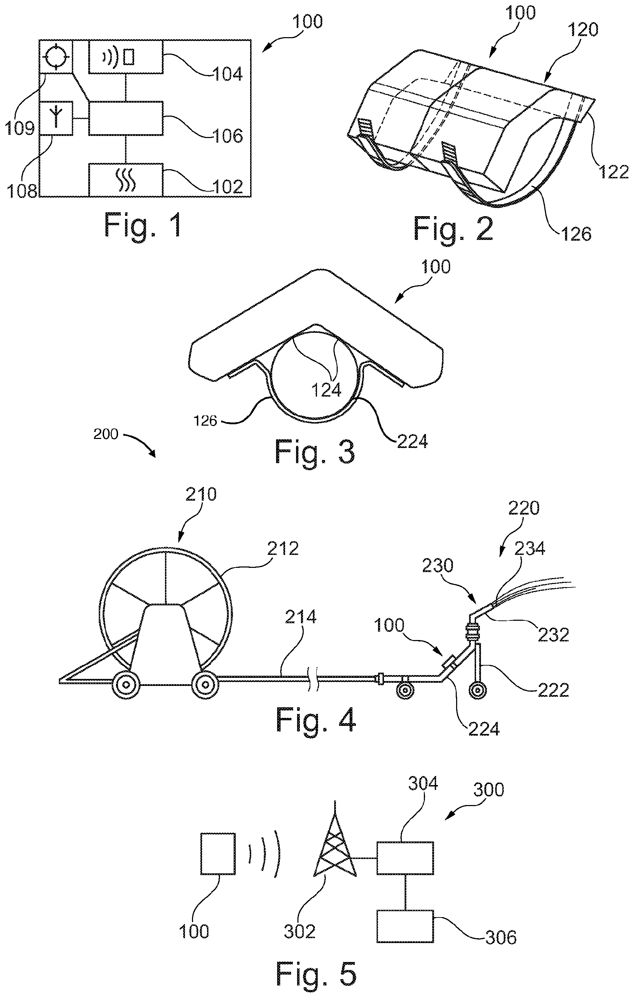

Fig. 4 shows a typical installation on an agricultural watering system 200 comprising a hose reel unit 210 and a sprinkler cart or trailer 220. On setting up the system in a field the sprinkler cart is extended from the hose reel unit, unwinding a hose 214 from a reel 212, wherein the hose is connected to a water supply on one end and the sprinkler cart on the other. The sprinkler cart comprises a cart 222 typically having wheels, holding a pipe 224 connecting the hose to a sprinkler assembly 230 which in turns comprises a sprinkler 232 for distributing water flowing through the hose and the pipe to the field. The sprinkler assembly typically comprises means for turning and controlling the direction of the sprinkler, such as a ticker 234 that takes energy from the water flow to turn the sprinkler. As the water flows the hose reel units turns the reel and winds in the cart until it has reached an end point at which point the watering system typically closes the water flow.

If a coupling fails or the hose ruptures the cart may be disconnected while the hose reel unit slowly continues to pull in the hose while large amounts of water is concentrated in a small area, causing soil erosion and potentially also causing significant property damage.

### Principles forming the basis of the invention

Central to the invention was the realization that in the case of a failure or a leak this rapidly escalates to a large leak which in turns means a dramatic fall in flow rate at the sprinkler cart. It would then be sufficient to register a qualitative drop in flow rate rather than a detailed quantitative measurement of a drop. It was realised that the turbulence caused by the water flow causes significant vibrations in the hose and that this could be sensed as vibrations in the pipe 224 attached between the hose 214 and the sprinkler 232. There are also other sources of vibrations and noise such as the source pumps, the turbine typically used in the hose reel unit to wind the reel 212, the sprinkler 232 and the ticker 234.

A solution then was to clamp a vibration sensor onto the pipe and register the presence of vibrations.

### Best Modes of Carrying Out the Invention

The embodiment of the apparatus or sensor system 100 according to the invention shown in Fig. 1 comprises a vibration detector 102 connected to a controller unit 106 which in turn is connected to a communication unit 108. Preferably, the vibration sensor is a piezo electric element provided with a weight or mass. When vibrations from for example the pipe is transferred to the vibration sensor the weight will vibrate. This will in turn induce electrical impulses. The sensitivity and frequency response of the sensor can be configured by controlling the mass of the weight, dampening and other properties of the vibration sensor. Other types of vibration sensors may also be used like accelerometers, gyroscopes, mems devices, etc. The vibration sensor is preferably tuned to capture vibrations in the range from 0 to 10 kHz, more preferably between 0 and 1 kHz. The sensor system may be configured to capture vibrations continuously, where presence of vibration above a certain threshold indicates fluid flow. This enables continuous detection of vibrations. Preferably, the sensor system captures vibrations at certain intervals, this to save electrical power for example if the sensor is battery powered. The sensor system may operate in a triggered mode where the system is notified by the vibration sensor of vibrations above certain amplitude, length, pattern, signature, frequency, interval or other property of the vibration. When the control unit is operated in an interrupt mode, occurrence of certain vibrations is triggering the control unit to perform some specific action. Triggered mode reduces power consumption and enables robust detection of changes in the fluid flow. The control unit may alternate between the modes of capturing vibrations to reduced measurements when equipment in stored and increased number of measurements for rapid warning of errors.

Fig. 2 shows an embodiment of the sensor system 100 packaged into a sensor package 120 having a casing 122. On one side is a contact area 124 that is put in contact with the pipe 224 and fixed in place using some form of attachment means 126 such as but not limited to clamps, screws or bands. Preferably the sensitive parts of the sensor system is potted for protection while any antenna for the communication unit 108 is placed near the surface or optionally integrated with exposed parts of the attachment means. The casing may be made of plastic or metal.

Fig. 3 shows the sensor package attached to a pipe using attachment means in the form of bands.

Fig. 4 shows a typical installation of the sensor system 100 on an agricultural watering system where the pipe 224 is placed into contact with the contact area 124 of the sensor system 100 and securely attached using attachment means 126.

In operations the sprinkler cart is extended from the hose reel system and water pressure is applied. The sensor system registers vibrations and the controller unit sends a message via the communication unit 108.

The sensor system 100 can detect the specific vibration patterns from the ticker. The ticker creates a distinct vibration pattern that can be easily determined. Determining the interval between the ticks from the ticker can be used to detect the type of ticker, amount of water flow, if water is flowing, pressure of the water etc. The tick propagates as an impulse through the pipe. Loss of ticks from the ticker may indicate stop of water flow, problems with the ticker or something occurring at the location of the ticker. Other parts in a watering system generate easily detectable impulses or patterns of vibrations, like reduction valves, stop valves, pumps, inlets, outlets etc. The frequency components, interval in these patterns of vibrations, interval between these patterns of vibrations can be used to determine water flow in the watering system. The vibration pattern or vibration signatures can be used to warn where errors has appeared by detecting loss or changes of certain vibration signatures. The vibration sensor is suitable to detect shock waves created by units in the watering system. Vibrations can be detected by attaching sensors to all parts or units that are in mechanical communication with the pipe or hose that water is flowing through.

Fig. 5 shows a communication system with at least one sensor system 100, a server 304 and terminal 306. The message sent via the communication unit 106 is received by a communication receiver 302. In practice this can be a GSM or other form of mobile communication system wherein there are more than one receiver. The message is forwarded to a server 304 that aggregates and logs data from typically many sensor systems and presents this to a user on a user terminal 306. Typically the terminal indicates the status for all watering systems that the user is responsible for. Optionally the information is overlaid a map that allows the user to quickly determine where the cart is in the field. The sensor system may also provide addition information like the location of the sensor. The sensor system may also comprise sensors for measuring temperature, humidity, registering sun light and similar to register environmental conditions in proximity of the sensor system. The server may use computer learning, data mining and data analysis to estimate need for irrigation, estimate maintenance needs, create optimized watering schedules, and create automated schedules for watering.

### Alternative Embodiments

A number of variations on the above can be envisaged. For instance the vibration sensor could be replaced with or complemented by a microphone that detects the noise emitted by the turbulent flow. In cases where there is very little noise such as for large diameter hoses and reduced pressures the microphone could listen to sounds emitted from a source on the hose reel unit, the sound being easily conducted through the water. A loss of signal would indicate a problem and a cause for sending a warning.

Alternatively the microphone could listen to the characteristic sounds made by the source pump, the turbine typically used in the hose reel unit to wind the reel, the sprinkler 232 or the ticker 234 such as the frequent ticks as the sprinkler is advanced around the operating sectors or the sound made when the return mechanism pulls the sprinkler back to a starting angle. Similarly such characteristic sounds may also be detected by the vibration sensor as vibrations propagating through the water in the pipe or tube.

In a further embodiment also the hose reel unit is provided with a sensor system. This allows for indicating loss of mains water pressure or that the cart was successfully retracted all the way and the water flow closed. This would result in vibrations ceasing both in the cart and in the hose reel system at the same time. The advantage is that this avoids false alarms and allows for determining better priorities in case of simultaneous warnings.

In case of failure it is beneficial to quickly locate the problem. It can therefore be advantageous to place a sensor system also on the hose, thus allowing the operator to quickly determine if the failure is upstream or downstream of the hose mounted sensor.

In another embodiment the sensor system also comprises a positioning unit 109 such as GPS wherein position data is optionally also transmitted by the communication unit. Position data may be used to track the position of the equipment. The position of the sprinkler cart can be used to regulate the amount of water provided to the sprinkler in the sprinkler cart, thus enabling precision watering. The position data may also be used to create warnings that objects are not moving, are stuck, missing, lost, etc. Position data may be used to for geofencing to enable special watering regimes in special areas.

In yet another embodiment the sensor system also comprises an inclinometer to determine if the cart has fallen over.

In another embodiment the sensor can be a pressure sensor placed in a T-pipe, preferably inserted between the pipe 224 and the hose 214, alternatively the pipe 224 and the sprinkler 232. While this can work it introduces three more connections that each is a potential source of failure.

In another embodiment the sensor can be embedded in or mounted on the inside of the pipe, a connection, a T-pipe or other part of the system to measure vibrations for detection of fluid flow. This is beneficial for simplifying installation of the system and removing the need for clamping the sensor onto a part of the system. The sensor may also be embedded such that it is in contact with the water flow and thereby also may measure temperature, pressure and other properties of the water stream.

In a further embodiment the water flow is determined by the fact that the water flowing is typically cold, either directly by a thermometer or more indirectly by natural condensation that occurs around a cold pipe or hose. It is also possible to place a moisture detector near the sprinkler, though reaction time in case of failure is significantly slower. Another possibility is to detect the motion of the ticker, for instance using a hall sensor to detect the motion of a magnet attached to the ticker. It is also possible to use capacitive measurements of water in the pipe or hose though this would rely on water draining out of the system. For a hose attached system it is possible to measure the pressure by measuring the tension in the attachment means 126 since the hose is somewhat elastic and typically under a high pressure when in use.

Since the vibrations can be quite vigorous it is possible to use these for energy harvesting. The sensor system then will charge for a while until enough energy to transmit and then discharge the stored energy when reporting.

In a further embodiment the communication system 300 comprises a communication transceiver 302 which allows transmission of data to the sensor system. This can be software upgrades, parameters such as reporting frequencies, configurations and more.

In yet another embodiment the sensor is used to detect water flow in fire hoses used during fire fighting. The sensor can be attached to the fire hoses, nozzles, fire hydrants and other parts of the water distribution network. The sensors can be rapidly be deployed to the equipment during firefighting to monitor equipment, detect leakages. The sensor may also be used on sprinkler installation to detect leakage, if water is delivered to the appropriate area, monitor for correct amount of water flowing though the system.

In yet another embodiment the sensor is used to monitor water flow to a snow canon when it is making snow. The sensor is advantageous in allowing detection of changes in the water flow to the snow canon, especially in the noisy environment in the proximity of the snow canon.

In yet another embodiment the sensor is attached to a part, such as a concrete padding, that is only temporarily in contact with the hose where water is passing through. This can be when the hose is winded in and the hose slams or hits the part. These slams or hits by the hose can be detected by the sensor as vibrations, shocks, impulses, or sounds.

### Industrial Applicability

The invention according to the application finds use in agricultural watering but also in non-invasive determination of fluid flows including but not limited to oil, gas, fuel, and cooling water.

While the agricultural examples provided here are relating to water it should be noted that it is also common to inject fertilizers into the water stream in which case the fluid no longer is pure water.

## Claims

1. A system (100) for detecting fluid flow in a hose or pipe (224 , 214) of a watering system (200), the watering system (200) comprising:
the hose and a reel for the hose; and
a sprinkler cart, wherein the pipe connects the hose to a sprinkler assembly of the watering system comprising a sprinkler for distributing water flowing through the hose and a ticker for utilizing energy from the water flowing through the hose to rotate the sprinkler,
the system (100) for detecting fluid flow comprising a sensor system comprising at least one sensor (102, 104) for registering presence of vibration, wherein the at least one sensor is attached to at least one selected from a group comprising the hose or pipe (224, 214) and a structure (210, 220) in mechanical communication with the hose or pipe (224, 214), and wherein the sensor system is configured to detect vibration patterns caused by the ticker and determine an interval between ticks from the ticker.

2. The system (100) according to claim 1, comprising a sensor package (120) including the vibration sensor, a casing, and attachment means for attachment of the casing to the hose or pipe so that a contact area of the casing contacts the hose or pipe.

3. The system (100) according to any of claims 1 and 2, wherein the watering system (200) further comprises a second system for measuring fluid flow, attached to the hose reel unit (210).

4. The system (100) according to any of claims 1 to 3 wherein the vibration sensor is a microphone (104) for detecting noise caused by the ticker (234).

## Patentansprüche

1. System (100) zum Erfassen von Flüssigkeitsströmung in einem Schlauch oder Rohr (224, 214) eines Bewässerungssystems (200), wobei das Bewässerungssystem (200) Folgendes umfasst:
den Schlauch und eine Trommel für den Schlauch; und
einen Sprinklerwagen, wobei das Rohr den Schlauch mit einer Sprinkleranordnung des Bewässerungssystems verbindet, die einen Sprinkler zum Verteilen von durch den Schlauch fließendem Wasser und einen Ticker zum Verwenden von Energie aus dem durch den Schlauch fließenden Wasser zum Drehen des Sprinklers umfasst,
das System (100) zum Erfassen von Flüssigkeitsströmung, umfassend ein Sensorsystem, das mindestens einen Sensor (102, 104) zum Registrieren des Vorhandenseins von Vibrationen umfasst, wobei der mindestens eine Sensor an mindestens einem Element, ausgewählt aus einer Gruppe umfassend den Schlauch oder das Rohr (224, 214) und eine Struktur (210, 220) in mechanischer Verbindung mit dem Schlauch oder dem Rohr (224, 214),angebracht ist, und wobei das Sensorsystem dazu konfiguriert ist, durch den Ticker verursachte Vibrationsmuster zu erfassen und ein Intervall zwischen Ticks von dem Ticker zu bestimmen.

2. System (100) nach Anspruch 1, umfassend ein Sensorpaket (120), das den Vibrationssensor, ein Gehäuse und Befestigungsmittel zur Befestigung des Gehäuses an dem Schlauch oder Rohr enthält, sodass ein Kontaktbereich des Gehäuses den Schlauch oder das Rohr berührt.

3. System (100) nach einem der Ansprüche 1 und 2, wobei das Bewässerungssystem (200) ferner ein zweites System zum Messen von Flüssigkeitsströmung umfasst, das an der Schlauchtrommeleinheit (210) angebracht ist.

4. System (100) nach einem der Ansprüche 1 bis 3, wobei der Vibrationssensor ein Mikrofon (104) zum Erfassen von durch den Ticker (234) verursachtem Lärm ist.

## Revendications

1. Système (100) pour détecter un écoulement de fluide dans un tuyau ou un tube (224, 214) d'un système d'arrosage (200), le système d'arrosage (200) comprenant :
le tuyau et une bobine pour le tuyau ; et
un chariot d'arrosage, dans lequel le tube relie le tuyau à un ensemble d'arrosage du système d'arrosage comprenant un arroseur pour distribuer l'eau s'écoulant à travers le tuyau et un mécanisme de déclenchement pour utiliser l'énergie de l'eau s'écoulant à travers le tuyau pour faire tourner l'arroseur,
le système (100) pour détecter un écoulement de fluide comprenant un système de capteur comprenant au moins un capteur (102, 104) pour enregistrer une présence de vibration, dans lequel l'au moins un capteur est fixé à au moins un élément choisi dans un groupe comprenant le tuyau ou tube (224, 214) et une structure (210, 220) en communication mécanique avec le tuyau ou tube (224, 214), et dans lequel le système de capteur est configuré pour détecter des modèles de vibration causés par le mécanisme de déclenchement et déterminer un intervalle entre les tics provenant du mécanisme de déclenchement.

2. Système (100) selon la revendication 1, comprenant un ensemble capteur (120) comprenant le capteur de vibrations, un boîtier et des moyens de fixation pour fixer le boîtier au tuyau ou au tube de sorte qu'une zone de contact du boîtier entre en contact avec le tuyau ou le tube.

3. Système (100) selon l'une quelconque des revendications 1 et 2, dans lequel le système d'arrosage (200) comprend en outre un second système pour mesurer l'écoulement de fluide, fixé à l'unité de bobine de tuyau (210).

4. Système (100) selon l'une quelconque des revendications 1 à 3, dans lequel le capteur de vibrations est un microphone (104) pour détecter le bruit causé par le mécanisme de déclenchement (234).
